# FASCICULE DE BREVET EUROPEEN

(11) **EP 0 813 688 B1**
(45) Date de publication et mention de la délivrance du brevet: **22.12.1999**
(21) Numéro de dépôt: 96905914.6
(22) Date de dépôt: 05.03.1996
(51) Int. Cl.: G01S 3/14, H04R 25/00

(54) **APPAREIL PERSONNEL DE GONIOMETRIE**
PERSÖNLICHES ORTUNGSGERÄT
PERSONAL DIRECTION FINDING APPARATUS

(30) Priorité: 06.03.1995 FR 9502591
(43) Date de publication de la demande: 29.12.1997
(73) Titulaire: ROCKWELL-COLLINS FRANCE, 31701 Blagnac (FR)
(72) Inventeur: LANCIAUX, Jacques, F-31820 Pibrac (FR)
(74) Mandataire: Bruder, Michel
(86) Numéro de dépôt international: FR9600344
(87) Numéro de publication internationale: WO9627804

(56) Documents cités:
- EP-A- 0 266 250
- EP-A- 0 378 339
- EP-A- 0 629 832
- US-A- 4 449 018
- US-A- 4 774 515
- US-A- 5 068 832

## Description

La présente invention concerne un appareil personnel de goniométrie utilisable pour la détection d'un rayonnement électromagnétique, infrarouge ou ultrasonore émis à partir d'une source, en vue d'un repérage de la direction de cette source ou de la création d'un environnement sonore virtuel.

La goniométrie permet le repérage de la direction d'une source de rayonnement. Les applications classiques sont la goniométrie manuelle et la goniométrie automatique.

La goniométrie automatique est largement utilisée sur les installations fixes ou sur mobiles (avions, bateau, véhicule). L'indication de direction est disponible sous la forme d'un gisement (angle entre le porteur et la direction apparente) ou une indication d'écart de type droite gauche.

La goniométrie manuelle est souvent employée pour la recherche de la source d'émission à l'aide d'une antenne ou d'un capteur orienté à la main. Ce type de goniométrie repose sur la recherche de minimum ou maximum de réception sans délivrer l'information de position relative de la direction de la source par rapport à l'antenne ou capteur d'exploration.

Les deux types de goniométrie imposent la lecture d'un instrument souvent associé à une écoute sur écouteur ou haut-parleur pour permettre l'identification de la source. La goniométrie manuelle ne permet pas une recherche à main libre de la source de rayonnement.

On connaît déjà, ainsi qu'il est décrit dans le brevet US-A-5 068 832, un appareil personnel de goniométrie pour la détection d'un rayonnement ultrasonore et le repérage de la direction de la source émettant ce rayonnement. Cet appareil comporte un oscillateur local pour convertir les fréquences inaudibles du signal ultrasonore en fréquences comprises dans la plage des sons audibles.

Le brevet US-A-4 774 515 divulgue un appareil d'indication d'attitude normale pour fournir une indication d'une attitude normale à un individu conjointement avec un moyen pour produire un signal représentant l'attitude en temps réel de l'individu dans l'espace et un moyen pour placer, dans l'espace à trois dimensions, l'indication normale relative à l'individu en réponse au signal en temps réel représentant l'attitude en temps réel, de manière à fournir à l'individu une indication normale relative à l'attitude en temps réel de l'individu dans l'espace.

Le brevet US-A-4 449 018 décrit un appareil destiné aux malentendants et permettant l'amplification des signaux en conservant la perception des sons en trois dimensions. Dans cet appareil on utilise le déphasage naturel provoqué par l'écartement des microphones et l'utilisateur de l'appareil perçoit l'azimut du signal grâce au déphasage du signal audible disponible sur les écouteurs après l'amplification.

La présente invention vise à procurer un appareil de goniométrie de conception particulièrement simple, portable, laissant les mains libres à son utilisateur et ne faisant pas appel à la lecture d'un instrument.

A cet effet, cet appareil personnel de goniométrie utilisable pour la détection d'un rayonnement électromagnétique, infrarouge ou ultrasonore émis à partir d'une source, en vue du repérage de la direction de cette source ou de la création d'un environnement sonore virtuel, comportant un moyen de captage du rayonnement porté par la tête de l'utilisateur, orientable par rapport à la source par un mouvement de rotation de la tête et produisant un signal de caractéristique variable en fonction de la direction de la source par rapport à l'axe d'observation de l'utilisateur correspondant à la position du moyen de captage, c'est-à-dire à la position de la tête, et deux écouteurs placés respectivement sur les deux oreilles de l'utilisateur, pour émettre un signal sonore dont la nature dépend de l'écart angulaire entre la direction de la source et ladite position présente de sa tête, est caractérisé en ce que le moyen de captage est constitué par un système d'antenne possédant une sortie et au moins un axe d'analyse parallèle à l'axe transversal des oreilles et que l'appareil comporte en outre un récepteur démodulateur, dont l'entrée est reliée à la sortie du moyen de captage et un circuit de traitement du signal démodulé connecté à la sortie du récepteur-démodulateur et produisant, à sa sortie, un signal de commande, fonction de l'écart angulaire entre la direction de la source et la position présente du moyen de captage, c'est-à-dire de l'axe d'observation de l'utilisateur, et deux circuits de traitement du signal audio, affectés respectivement aux voix phoniques droite et gauche, dont les entrées sont connectées à la sortie dudit circuit de traitement et dont les sorties sont connectées respectivement aux deux écouteurs droit et gauche, pour permettre la perception de la direction de la source par l'écoute binaurale.

L'appareil de goniométrie suivant la présente invention peut être avantageusement réalisé sous la forme d'un casque à écouteurs dans lequel est incorporée un système d'antenne ou de capteur constituant le moyen de captage du rayonnement. Tous les autres éléments du circuit électronique de traitement du signal capté peuvent être également intégrés dans le casque ou bien encore ils peuvent être portés en un point quelconque du corps de l'utilisateur, en étant reliés par fils au casque.

L'appareil de goniométrie suivant la présente invention peut être utilisé avantageusement dans de nombreuses applications en vue du repérage de la direction d'une source de rayonnement. A titre d'exemples d'applications, on peut citer la localisation de balises de détresse sur terre et sous la neige (détection de personnes prises sous une avalanche), le rendez-vous sur une zone balisée par un émetteur, la communication avec localisation dans des activités aéronautiques individuelles utilisant des parachutes, parapentes, deltaplanes, ULM, la localisation et une identification de perturbateurs électromagnétiques, la sécurité et la communication des personnels équipés d'un casque ou d'un scaphandre et travaillant dans des conditions sévères dans l'environnement ou en milieux hostiles. Dans ce dernier cas, le système de réception utilisé pour la goniométrie est complété par un émetteur afin de permettre une liaison bilatérale avec une localisation réciproque. Ce dernier appareil peut être ainsi avantageusement utilisé par des pompiers intervenant en zone dangereuse à faible visibilité, par des personnels travaillant en zone polluée, bruyante, radioactive, par des astronautes en sortie extra-véhiculaire, par des plongeurs sous-marins (transmission par modulation d'une onde ultrasonore) etc....

Comme il a été indiqué précédemment, l'appareil de goniomètre suivant la présente invention peut être aussi utilisé avantageusement pour la simulation d'un environnement sonore dans un environnement virtuel interactif (formation sur simulateur ou jeu).

On décrira ci-après, à titre d'exemples non limitatif, diverses formes d'exécution de la présente invention, en référence aux dessins annexés sur lesquels :

La figure 1 est un schéma synoptique d'un appareil de goniométrie suivant la présente invention permettant le repérage de la direction d'une source de rayonnement au moyen d'une écoute binaurale.

La figure 2 est un schéma synoptique d'une forme d'éxécution d'un appareil de goniomètre permettant le repérage de la direction d'une source de rayonnement modulée ou non modulée au moyen d'une écoute binaurale.

Les figures 3A et 3B sont des diagrammes illustrant respectivement les amplitudes des signaux sonores produits dans les oreilles droite et gauche, respectivement dans le cas de l'orientation de la tête en direction de la source de rayonnement et de son orientation après une rotation de 90°.

La figure 4 est un diagramme illustrant la variation du retard entre les signaux appliqués aux écouteurs gauche et droit en fonction de l'écart angulaire entre la tête de l'utilisateur et la direction de la source.

La figure 5 est un diagramme illustrant la variation de l'amplitude des signaux sonores dans les écouteurs gauche et droit, en fonction de l'écart angulaire, dans un mode normal et dans un mode ralliement.

La figure 6 est un schéma synoptique d'une variante de l'appareil dans lequel l'analyse de la provenance du rayonnement est réalisée par interférométrie.

La figure 7 est un schéma synoptique d'une variante de l'appareil appliquée à la simulation d'un environnement sonore.

La figure 8 est un schéma d'un organigramme du logiciel pour le traitement au signal de goniométrie.

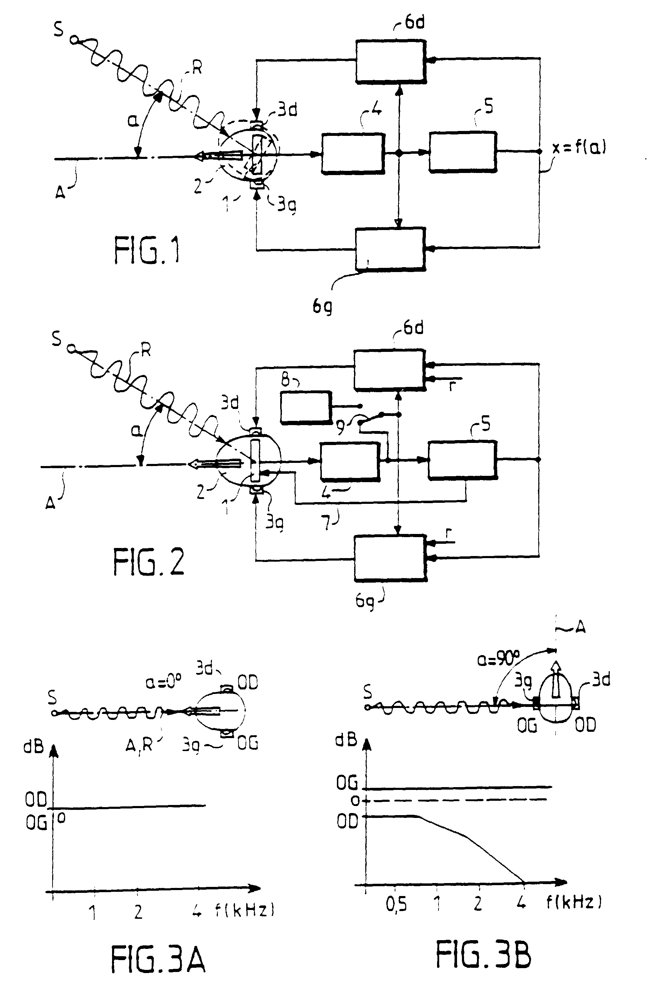

Si on se référe maintenant à la figure 1, on voit qu'elle représente un schéma synoptique d'un appareil de goniométrie, suivant la présente invention utilisable pour le captage d'un rayonnement électromagnétique émis par une source S. Dans la description qui va suivre, tous les exemples d'applications de l'appareil suivant la présente invention qui seront decrits concerneront le captage d'un rayonnement éléctromagnetique mais il va de soi que l'appareil suivant la présente invention pourrait être également utilisé pour capter d'autres rayonnements, tels que des rayonnements infrarouges et ultrasonores, en utilisant des capteurs appropriés.

L'appareil de goniométrie suivant la présente invention comporte un moyen 1 de captage du rayonnement électromagnétique emis par la source S. en l'occurrence un système d'antenne disposé transversalement sur la tête 2 de l'utilisateur de l'appareil, c'est-à-dire parallèlement à l'axe de ses oreilles. L'appareil de goniométrie utilise en outre deux écouteurs droit 3d et gauche 3g pour produire des signaux sonores appliqués respectivement aux oreilles droite et gauche de l'utilisateur.

Le système d'antenne 1 est connectée à un récepteur 4 qui reçoit le signal capté par l'antenne, lequel est fonction de l'écart angulaire a entre la direction R de la source S du rayonnement électromagnétique et la direction d'observation A de l'utilisateur de l'appareil, la direction de l'observation de l'utilisateur de l'appareil étant indiquée par une flèche noire sur chacune des figures du dessin.

Le récepteur 4 délivre à sa sortie un signal de goniométrie qui est appliqué à l'entrée d'un circuit 5 de traitement du signal de goniométrie délivrant à sa sortie un signal x qui est fonction de l'écart angulaire a. Autrement dit, on a x = f(a). La sortie du circuit 5 est connectée aux entrées de deux circuits de traitement du signal audio 6d,6g, affectés respectivement aux voix phoniques droite et gauche et dont les sorties sont connectées respectivement aux écouteurs droit 3d et gauche 3g.

L'appareil de goniométrie suivant la présente invention permet à son utilisateur de localiser la source S d'un rayonnement électromagnétique en gardant les mains libres et sans exiger une attention particulière de sa part, par exemple sans avoir à lire un indicateur de position. Dans le cas du système d'écoute binaurale représenté sur la figure 1, les caractéristiques des signaux appliquées sur les écouteurs 3d,3g permettent, pour le porteur de ces écouteurs, une restitution de l'environnement sonore semblable à celle dun interlocuteur direct placé dans la même direction par rapport à l'orientation de la tête. Aucune instruction particulière n'est nécéssaire pour l'utilisation de l'appareil et les réflexes naturels permettent la localisation de la source S avec la précision désirée. Une localisation grossière de la source S est obtenue sans mouvement de la tête, simplement à partir de la différence des signaux appliqués aux deux écouteurs droit 3d et gauche 3g. Un léger mouvement de pivotement de la tête est suffisant pour lever l'ambiguité d'une source placée devant ou derriére l'utilisateur. En effet, si la source S se trouve placée dans l'axe de la tête et devant l'utilisateur, un pivotement de la tête dans le sens des aiguilles d'une montre se traduit, pour l'utilisateur de l'appareil, par un déplacement relatif de la source S vers sa gauche. Par contre, si la source S se trouve en arrière de l'utilisateur, le même mouvement de pivotement de la tête se traduit par un déplacement relatif de la source S vers la droite. Enfin, si l'utilisateur désire une localisation précise de la source S, il tourne naturellement sa tête dans la direction apparente de la source sonore reconstituée au moyen des deux écouteurs 3d,3g.

Le système d'antenne 1 et les écouteurs 3d,3g peuvent servir uniquement à la goniomètrie ou bien encore ils peuvent être également utilisés pour une communication entre plusieurs personnes.

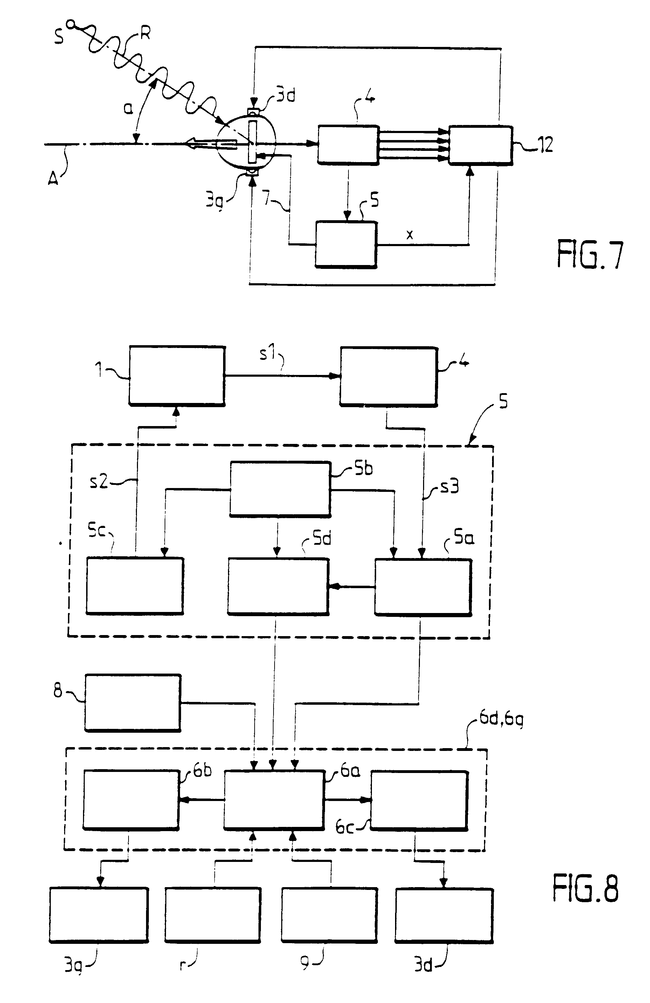

Ainsi qu'il a été decrit précédemment, l'appareil suivant la présente invention peut utiliser un système d'antenne 1 à un seul axe d'analyse parallèle à l'axe transversal des oreilles. Toutefois il est possible d'envisager une forme d'exécution plus élaborée utilisant au moins deux axes d'analyse non parallèles pour permettre une restitution plus réaliste de la position relative de la tête de l'utilisateur par rapport à la source d'émission S. Un système d'antenne à plusieurs axes d'analyse correspond à l'application décrite par la suite, à la création d'un environnement sonore virtuel intéractif (figure 7). L'analyse de la provenance du rayonnement peut s'effectuer par tout moyen connu et on peut utiliser à cet effet n'importe quelle méthode d'analyse classique dans les systèmes de goniométrie délivrant une information de déviation ou d'écart angulaire.

L'appareil comporte un casque supportant le système d'antenne 1 ou de capteur, ainsi que les écouteurs 3d,3g et éventuellement les autres composants 4,5,6d,6g du circuit électrique. autrement dit, le casque pourrait ne comporter que le système d'antenne 1 et les écouteurs 3d,3g, les autres éléments du circuit électrique étant portés sur le corps de l'utilisateur, à la ceinture ou sur son dos.

La figure 2 représente une forme d'execution de l'appareil de goniométrie utilisant une modulation d'amplitude, de phase ou de fréquence du signal capte par le système d'antenne. Si la porteuse du rayonnement électromagnétique provenant de la source S est modulée, le circuit 5 de traitement du signal qui est connecté au système d'antenne 1 par l'intermédiaire d'une liaison 7, appliqué à ce système d'antenne un signal modulant qui produit la modulation du signal capté. Le système d'antenne 1 délivre donc un signal d'antenne à double modulation au récepteur 4 intervenant également en tant que démodulateur. Ce recepteur 4 délivre ainsi a sa sortie deux signaux démodulés à basse fréquence superposés, à savoir l'un provenant de la modulation de la source et l'autre de la modulation par le système d'antenne 1 et ces deux signaux sont appliqués aux deux circuits de traitement du signal audio 6d et 6g et au circuit de traitement du signal de goniométrie 5. Par ailleurs, le circuit de traitement du signal de goniométrie 5 délivré a sa sortie le signal x qui est fonction de l'écart angulaire et qui est appliqué aux deux circuits 6d-6g. Les deux circuits de traitement du signal audio 6d-6g appliquent, aux ecouteurs respectifs 3d et 3g, des signaux différents en fonction de l'écart angulaire a.

Les fonctions assurées par les blocs 5,6d, 6g et 8 de la figure 2 peuvent être assurées par un logiciel mis en oeuvre par un DSP (Digital Signal Processor), équipement de petite dimension et à faible consommation d'energie. Le logiciel lui-même sera decrit schématiquement plus loin en référence à la figure 8.

Les figures 3A et 3B representent les niveaux des signaux sonores appliqués à l'oreille droite OD et à l'oreille gauche OG de l'utilisateur pour les deux valeurs extrêmes de l'écart angulaire de la tête de l'utilisateur par rapport à la source S, à savoir une position à écart angulaire nul (figure 3A) et une position à écart angulaire de 90° (figure 3B). On voit que, lorsque l'axe d'observation A est confondu avec la direction R de la source de rayonnement S, c'est-à-dire pour un écart angulaire nul, les signaux sonores appliqués aux deux oreilles ont la même amplitude, cette amplitude etant appelée "niveau de référence". Par contre, lorsque la tête tourne de 90° dans le sens des aiguilles d'une montre, ainsi qu'il est représenté sur la figure 3B, l'oreille exposée au rayonnement, c'est-à-dire l'oreille gauche OG dans le cas illustre, reçoit un signal sonore d'un niveau supérieur au niveau de référence tandis que l'oreille opposée c'est-à-dire l'oreille droite OD reçoit un signal sonore dont l'amplitude est inférieure au niveau de réference et va en décroissant avec la fréquence du rayonnement.

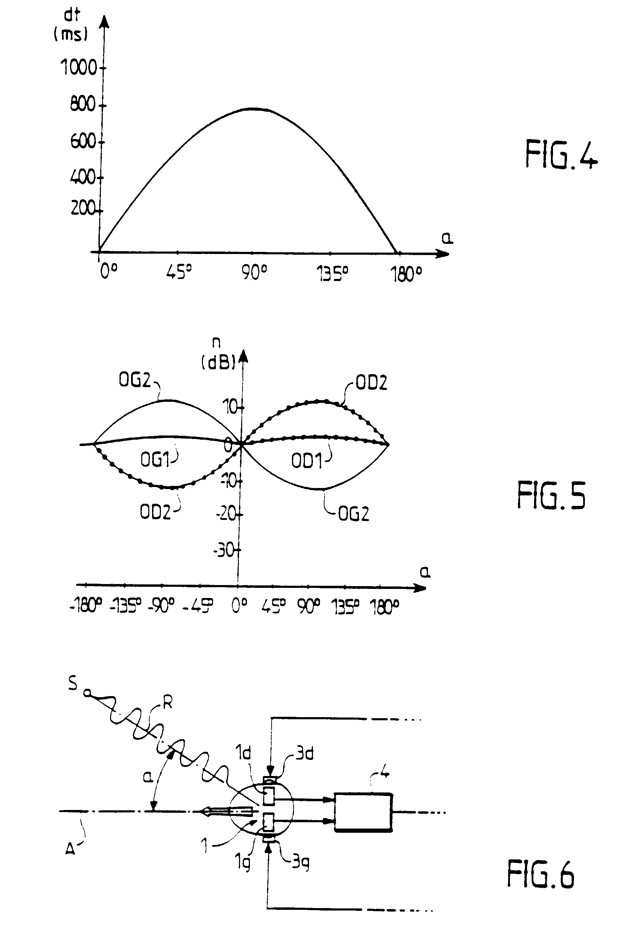

La figure 4 illustre la variation du retard dt du signal appliqué à l"oreille opposée à la source, c'est-à-dire à l'oreille droite OD sur la figure 3, par rapport au signal appliqué à l'oreille exposée c'est-à-dire l'oreille gauche OG. On voit que ce retard dt, exprimé en microsecondes, est maximal pour un ecart angulaire a de 90° et qu'il est nul pour un écart de 0° ou 180°, c'est-à-dire lorsque l'axe transversal des oreilles est perpendiculaire à la direction R de la source de rayonnement.

La figure 5 illustre la variation de l'amplitude du signal sonore appliqué à chacune des oreilles, dans le cas de deux modes de fonctionnement différents à savoir un mode normal et un mode ralliement dans lequel la sensibilité de l'appareil est accrue au voisinage de l'écart angulaire de 0°. Les courbes en trait simple correspondent à l'oreille gauche tandis que les courbes portant une succession de points noirs correspondent à l'oreille droite. Dans le mode normal, le niveau des signaux sonores appliqués aux oreilles gauche et droite suit les courbes respectives OG1 et OD1 lors d'une variation de l'écart angulaire a. Dans le mode ralliement, chacun des circuits 6d,6g de traitement du signal audio est connecté à un moyen produisant un signal de commande de mode ralliement r (figure 2), pour augmenter la pente des courbes, c'est-à-dire la sensibilité de l'appareil, au point de croisement zéro sur l'échelle des ordonnées correspondant au niveau sonore n en décibels. On voit sur la figure 5 que dans le mode ralliement les courbes OG2 et OD2 sont nettement plus prononcées et écartées et qu'elles se traduisent par des niveaux des signaux sonores beaucoup plus distincts entre l'oreille exposée au rayonnement et l'oreille opposée, dès que l'écart angulaire a s'écarte de la valeur 0°.

L'appareil dont le schéma est représente sur la figure 2, permet également de localiser une source d'un rayonnement à porteuse non modulée. Dans ce cas, on utilise un générateur de signal basse fréquence 8 qui peut être connecté, au moyen d'un commutateur 9, aux deux circuits de traitement du signal audio 6d-6g, à la place du récepteur 4. Ce générateur de signal basse fréquence 8 applique alors aux deux circuits 6d,6g son propre signal basse fréquence à la place du signal basse fréquence resultant de la démodulation, par le circuit recepteur-démodulateur 4, de la perceuse comme dans le cas précédemment décrit. Le commutateur 9 connecté ainsi, aux circuits de traitement du signal audio 6d-6g, soit le récepteur-démodulateur 4 lorsque la porteuse est modulée, soit le générateur basse fréquence 8 lorsque la porteuse n'est pas modulée.

La figure 6 est un schéma partiel d'une variante d'exécution dans laquelle l'analyse de la provenance du rayonnement est obtenue par interférométrie. Dans ce cas, le système d'antenne 1 comprend deux capteurs distincts 1g et 1d, connectés séparément au recepteur-démodulateur 4, pour détecter le déphasage de la porteuse du rayonnement sur les deux éléments d'antenne 1g,1d, en fonction de l'écart angulaire a.

La figure 7 illustre une application de l'appareil de goniométrie suivant la présente invention à la creation d'un environnement sonore virtuel intéractif. Dans ce cas, l'information de goniométrie est utilisée pour effectuer une rotation du panorama sonore asservie à la position de la tête de l'auditeur. L'appareil comporte alors, comme dans les cas précédents, le récepteur-démodulateur 4 et le circuit de traitement du signal 5 qui est connecté au système d'antenne 1 par la liaison 7 pour lui appliquer le signal modulant. Le recepteur-démodulateur 4 comprend toutefois plusieurs voies, par exemple au nombre de quatre (quadriphonie), et il comporte quatre sorties correspondant respectivement à ces quatre voies et qui sont connectées à un processeur du signal audio 12 relié aux deux écouteurs 3d,3g. Le circuit de traitement du signal 5 est également connecté au processeur du signal audio 12 pour lui appliquer le signal x caractérisant l'écart angulaire a. L'appareil permet ainsi de reconstituer, au moyen des deux écouteurs 3d,3g, un environnement sonore variant en fonction de la position de la tête par rapport à la direction de la source S. c'est-a-dire de l'écart angulaire a, exactement de la même façon que si l'auditeur se trouvait placé dans un environnement sonore à quatre sources acoustiques à savoir un haut-parleur avant droit, un haut-parleur avant gauche, un haut-parleur amere droit et un haut-parleur arrière gauche.

On décrira maintenant, en se référant à l'organigramme de la figure 8, un logiciel mis en oeuvre dans un DSP (Digital Signal Processor). On voit sur la figure 8 le réseau de capteurs, 1 correspondant au système d'antenne 1 de la figure 2, lequel émet un signal composite 11 en direction du récepteur ou démodulateur 4. Le reseau de capteurs ou système d'antenne 1 reçoit un signal s2 de commande du réseau ou du système d'antenne 1 à partir du circuit 5 de traitement du signal. Ce circuit 5 reçoit le signal audio s3 provenant du récepteur ou demodulateur 4, signal qui est soumis à une conversion analogique/numérique dans une étape 5a. Le circuit 5 de traitement du signal assume une fonction de synchronisation 5b qui intervient sur la fonction de commande 5c du système d'antenne 1, la conversion analogique/numérique 5a et le traitement du gisement 5d. Le résultant du traitement du gisement 5d est appliqué à une étape de traitement audio 6a des circuits de traitement du signal audio 6d, 6g sur laquelle interviennent egalement la donnée audio numérique, en provenance du générateur de signal basse fréquence 8, et le résultat de la conversion analogique/numérique 5a du circuit de traitement 5. L'étape de traitement audio 6a agit, par l'intermédiaire d'étapes de conversion numérique/analogique 6b,6c, sur l'écouteur gauche 3g et l'écouteur droit 3d et sur l'étape de traitement du signal audio 6a agissent également une sélection de sensibilité (signal de commande de mode ralliement r de la figure 2) et une sélection audio interne/externe (commutateur 9).

## Revendications

1. Appareil personnel de goniométrie utilisable pour la détection d'un rayonnement électromagnétique, infrarouge ou ultrasonore émis à partir d'une source (S), en vue du repérage de la direction de cette source ou de la création d'un environnement sonore virtuel, comportant un moyen (1) de captage du rayonnement porté par la tête (2) de l'utilisateur, orientable par rapport à la source (S) par un mouvement de rotation de la tête et produisant un signal de caractéristique variable en fonction de la direction (R) de la source (S) par rapport à l'axe d'observation de l'utilisateur correspondant à la position du moyen de captage (1), c'est-à-dire à la position de la tête, et deux écouteurs (3d,3g) placés respectivement sur les deux oreilles de l'utilisateur, pour émettre un signal sonore dont la nature dépend de l'écart angulaire (a) entre la direction de la source (S) et ladite position présente de sa tête caractérisé en ce que le moyen de captage (1) est constitué par un système d'antenne possédant une sortie et au moins un axe d'analyse parallèle à l'axe transversal des oreilles et que l'appareil comporte en outre un récepteur-démodulateur (4), dont l'entrée est reliée à la sortie du moyen de captage (1) et un circuit (5) de traitement du signal démodulé connecté à la sortie du récepteur-démodulateur (4) et produisant, à sa sortie, un signal de commande (x), fonction de l'écart angulaire (a) entre la direction de la source (S) et la position présente du moyen de captage (1), c'est-à-dire de l'axe d'observation de l'utilisateur, et deux circuits de traitement du signal audio (6d,6g), affectés respectivement aux voix phoniques droite et gauche, dont les entrées sont connectées à la sortie dudit circuit de traitement et dont les sorties sont connectées respectivement aux deux écouteurs droit (3d) et gauche (3g), pour permettre la perception de la direction de la source par l'écoute binaurale.

2. Appareil suivant la revendication 1 caractérisé en ce que le circuit (5) de traitement du signal démodulé est connecté au système d'antenne (1) par l'intermédiaire d'une liaison (7) pour appliquer à ce système d'antenne, un signal de modulation qui se combine alors avec la modulation de la porteuse du rayonnement si bien que le système d'antenne (1) délivre un signal d'antenne à double modulation au récepteur-démodulateur (4) et que le récepteur-démodulateur (4) délivre à sa sortie deux signaux démodulés à basse fréquence superposés, à savoir l'un provenant de la modulation de la porteuse et l'autre du signal de modulation appliqué au système d'antenne (1), ces deux signaux étant appliqués aux deux circuits de traitement du signal audio (6d,6g) et il comporte. pour le cas où la porteuse du rayonnement ne serait pas modulée, un générateur de signal basse fréquence (8) qui peut être connecté, au moyen d'un commutateur (9), aux deux circuits de traitement du signal audio (6d,6g), à la place du récepteur (4).

3. Appareil suivant la revendication 2 caractérisé en ce que chacun des circuits de traitement du signal audio (6d,6g) est connecté à un moyen produisant un signal (r) de commande de mode ralliement pour augmenter la sensibilité de l'appareil au voisinage de l'écart angulaire (a) de 0°.

4. Appareil suivant l'une quelconque des revendications 1 à 3 caractérisé en ce que l'analyse de la provenance du rayonnement est obtenue par interférométrie et le système d'antenne (1) comprend deux capteurs distincts (1g,1d), connectés séparément au récepteur-démodulateur (4), pour détecter le déphasage de la porteuse du rayonnement sur les deux éléments d'antenne (1g,1d), en fonction de l'écart angulaire (a).

5. Appareil suivant l'une quelconque des revendications 1 à 4, utilisé pour la création d'un environnement sonore virtuel interactif, caractérisé en ce que le récepteur-démodulateur (4) connecté au moyen de captage (1) comprend plusieurs voies et plusieurs sorties connectées à un processeur du signal audio (12) relié aux deux écouteurs (3d,3g), et le circuit (5) de traitement du signal de goniométrie qui est connecté au système d'antenne (1) pour lui appliquer un signal de modulation, est également connecté au processeur du signal audio (12) pour lui appliquer le signal (x) caractérisant l'écart angulaire (a) afin de reconstituer, au moyen des deux écouteurs (3d,3g), un environnement sonore variant en fonction de la position de la tête par rapport à la direction de la source (S), c'est-à-dire de l'écart angulaire (a), exactement de la même façon que si l'auditeur se trouvait placé dans un environnement sonore à plusieurs sources acoustiques.

## Claims

1. Personal direction-finding apparatus usable for detecting an electromagnetic, infrared or ultrasonic radiation, emitted from a source (S) with a view to locating the direction of this source or the creation of a virtual sound environment, comprising a radiation-sensing means (1) borne by the user's head (2), orientable with respect to the source (S) by a movement of rotation of the head and producing a signal of characteristic variable as a function of the direction (R) of the source (S) with respect to the axis of observation of the user corresponding to the position of the sensor means (1), i.e. to the position of the head, and two earphones (3d, 3g) placed respectively on the user's two ears, to emit a sound signal of which the nature depends on the angular divergence (a) between the direction of the source (S) and said present position of his head, characterized in that the sensor means (1) is constituted by an antenna system presenting an output and at least one analysis axis parallel to the transverse axis of the ears and that the apparatus further comprises a receiver-demodulator (4) of which the input is connected to the output of the sensor means (1) and a circuit (5) for processing the demodulated signal connected to the output of the receiver-demodulator (4) and producing, at its output, a control signal (x), function of the angular divergence (a) between the direction of the source (S) and the present position of the sensor means (1), i.e. of the axis of observation of the user, and two circuits for processing the audio signal (6d, 6g), respectively allocated to the right and left phonic voices, of which the inputs are connected to the output of said processing circuit and of which the outputs are respectively connected to the two right (3d) and left (3g) earphones to allow perception of the direction of the source by binaural listening.

2. Apparatus according to Claim 1, characterized in that the circuit (5) for processing the demodulated signal is connected to the antenna system (1) via a link (7) to apply to this antenna system a modulation signal which is then combined with the modulation of the carrier wave of the radiation so that the antenna system (1) delivers an antenna signal with double modulation to the receiver-demodulator (4) and that the receiver-demodulator (4) delivers at its output two superposed demodulated low-frequency signals, namely one coming from the modulation of the carrier wave and the other from the modulation signal applied to the antenna system (1), these two signals being applied to the two circuits for processing the audio signal (6d, 6g) and it comprises, if the carrier wave of the radiation is not modulated, a low-frequency signal generator (8) which may be connected, by means of a commutator (9), to the two circuits for processing the audio signal (6d, 6g), in place of the receiver (4).

3. Apparatus according to Claim 2, characterized in that each of the circuits for processing the audio signal (6d, 6g) is connected to a means producing a homing mode control signal (r) in order to increase the sensitivity of the apparatus in the vicinity of the angular divergence (a) by 0°.

4. Apparatus according to any one of Claims 1 to 3, characterized in that the analysis of the origin of the radiation is obtained by interferometry and the antenna system (1) comprises two distinct sensors (1g, 1d), connected separately to the receiver-demodulator (4), to detect the phase-shift of the carrier wave of the radiation on the two antenna elements (1g, 1d), as a function of the angular divergence (a).

5. Apparatus according to any one of Claims 1 to 4, used for the creation of an interactive virtual sound environment, characterized in that the receiver-demodulator (4) connected to the sensor means (1) comprises a plurality of ways and a plurality of outputs connected to a processor of the audio signal (12) connected to the two earphones (3d, 3g), and the circuit (5) for processing the direction-finding signal which is connected to the antenna system (1) in order to apply thereto a modulation signal, is also connected to the processor of the audio signal (12) to apply thereto the signal (x) characterizing the angular divergence (a) in order to reconstitute, by means of the two earphones (3d, 3g) a sound environment varying as a function of the position of the head with respect to the direction of the source (S), i.e. of the angular divergence (a), exactly in the same way as if the listener were located in a sound environment with a plurality of acoustic sources.

## Patentansprüche

1. Persönliches Winkelmeßgerät, das zur Erfassung der von einer Quelle (S) ausgesandten elektromagnetischen, infraroten oder Ultraschallstrahlung verwendbar ist, um die Richtung dieser Quelle zu bestimmen, oder eine virtuelle Schallumgebung zu erzeugen, umfassend ein von dem Kopf (2) des Verwenders getragenes Mittel (1) zur Erfassung der Strahlung, das durch eine Drehbewegung des Kopfes bezüglich der Quelle (S) orientierbar ist und ein Signal mit einer Charakteristik erzeugt, die variabel ist in Abhängigkeit von der Richtung (R) der Quelle (S) bezüglich der Beobachtungsachse des Verwenders, die der Position des Erfassungsmittels (1), das heißt, der Position des Kopfes entspricht, und zwei auf den beiden Ohren des Verwenders angeordnete Hörmuscheln (3d, 3g), um ein Schallsignal auszusenden, dessen Art von der Winkelabweichung (a) zwischen der Richtung der Quelle (S) und der augenblicklichen Position des Kopfes des Verwenders abhängt, dadurch gekennzeichnet, daß das Erfassungsmittel (1) aus einem Antennensystem (1) besteht, das einen Ausgang und mindestens eine zu der Querachse der Ohren parallele Analysenachse besitzt, und daß das Gerät außerdem einen Empfänger-Demodulator (4) umfaßt, dessen Eingang mit dem Ausgang des Erfassungsmittels (1) verbunden ist, und eine Schaltung (5) zur Verarbeitung des demodulierten Signals umfaßt, die an den Ausgang des Empfänger-Demodulators (4) angeschlossen ist, und an ihrem Ausgang ein Steuersignal (x) erzeugt, das von der Winkelabweichung (a) zwischen der Richtung der Quelle (S) und der augenblicklichen Position des Erfassungsmittels (1), das heißt, der Beobachtungsachse des Verwenders, abhängt, und zwei Schaltungen (6d, 6g) zur Verarbeitung des Audiosignals umfaßt, die dem rechten bzw. linken Schallkanal zugeordnet sind, und deren Eingänge an den Ausgang der Verarbeitungsschaltung (5) angeschlossen sind, und deren Ausgänge mit der rechten Hörmuschel (3d) bzw. der linken Hörmuschel (3g) verbunden sind, um die Richtung der Quelle durch das binaurale Hören wahmehmen zu können.

2. Gerät gemäß Anspruch 1, dadurch gekennzeichnet, daß die Schaltung (5) zur Verarbeitung des demodulierten Signals über eine Verbindung (7) an das Antennensystem (1) angeschlossen ist, um ein Modulationssignal auf dieses Antennensystem zu geben, das dann mit der Modulation der Trägerwelle der Strahlung so kombiniert wird, daß das Antennensystem (1) ein Antennensignal mit doppelter Modulation an den Empfänger-Demodulator (4) ausgibt, und daß der Empfänger-Demodulator (4) an seinem Ausgang zwei überlagerte demodulierte Niederfrequenzsignale ausgibt, und zwar eines, das von der Modulation der Trägerwelle herrührt, und das andere, das von dem auf das Antennensystem (1) gegebenen Modulationssignal herrührt, wobei diese zwei Signale auf die zwei Schaltungen (6d, 6g) zur Verarbeitung des Audiosignals gegeben werden, und das Gerät umfaßt, falls die Trägerwelle der Strahlung nicht moduliert ist, einen Niederfrequenz-Signalgenerator (8), der anstelle des Empfänger-Demodulators (4) mittels eines Umschalters (9) an die zwei Schaltungen (6d, 6g) zur Verarbeitung des Audiosignals angeschlossen werden kann.

3. Gerät gemäß Anspruch 2, dadurch gekennzeichnet, daß jede der Schaltungen (6d, 6g) zur Verarbeitung des Audiosignals an ein Mittel angeschlossen ist, das ein Signal (r) zur Steuerung des Zielpeilungsmodus erzeugt, um die Empfindlichkeit des Gerätes in der Nähe einer Winkelabweichung von 0° zu erhöhen.

4. Gerät gemäß irgendeinem der Ansprüche 1 bis 3, dadurch gekennzeichnet, daß die Analyse der Herkunft der Strahlung durch Interferometrie erhalten wird, und das Antennensystem (1) zwei getrennte Erfassungsmittel (1g, 1d) aufweist, die an den Empfänger-Demodulator (4) getrennt angeschlossen sind, um die Phasenverschiebung der Trägerwelle der Strahlung bei den zwei Antennenelementen (1g, 1d) in Abhängigkeit von der Winkelabweichung (a) zu erfassen.

5. Gerät gemäß irgendeinem der Ansprüche 1 bis 4, das für die Erzeugung einer interaktiven virtuellen Schallumgebung verwendet wird, dadurch gekennzeichnet, daß der an das Erfassungsmittel (1) angeschlossene Empfänger-Demodulator (4) mehrere Kanäle und mehrere Ausgänge aufweist, die an einen Audiosignal-Prozessor (12) angeschlossen sind, der mit den zwei Hörmuscheln (3d, 3g) verbunden ist, und die Schaltung (5) zur Verarbeitung des Winkelmeßsignals, die an das Antennensystem (1) angeschlossen ist, um ein Modulationssignal darauf zu geben, ebenfalls an den Audiosignal-Prozessor (12) angeschlossen ist, um das Signal (x), das die Winkelabweichung (a) kennzeichnet, auf ihn zu geben, damit mittels der zwei Hörmuscheln (3d, 3g) eine Schallumgebung rekonstituiert wird, die in Abhängigkeit von der Position des Kopfes bezüglich der Quelle (S), das heißt, der Winkelabweichung (a), auf genau die gleiche Weise variiert, wie wenn der Hörer sich in einer Schallumgebung mit mehreren akustischen Quellen befinden würde.
